# EUROPÄISCHE PATENTSCHRIFT

(11) **EP 3 733 458 B1**
(45) Veröffentlichungstag und Bekanntmachung des Hinweises auf die Patenterteilung: **23.10.2024**
(21) Anmeldenummer: 20172740.1
(22) Anmeldetag: 04.05.2020
(51) Int. Cl.: B60R 13/08, B60K 35/00, G06F 1/18, G06F 1/20

(54) **VORRICHTUNG ZUR AUFNAHME EINER RECHENEINHEIT**
DEVICE FOR HOLDING A COMPUTING UNIT
DISPOSITIF DE RÉCEPTION D'UNE UNITÉ DE CALCUL

(30) Priorität: 03.05.2019 DE 102019111494
(43) Veröffentlichungstag der Anmeldung: 04.11.2020
(73) Patentinhaber: KONRAD GmbH, 78315 Radolfzell (DE)
(72) Erfinder: KONRAD, Michael, 78315 Radolfzell (DE); HOLZHEU, Ralf, 72202 Nagold (DE); FRECH, Jochen, 72654 Neckertenzlingen (DE)
(74) Vertreter: Patentanwälte und Rechtsanwalt Weiß, Arat & Partner mbB

(56) Entgegenhaltungen:
- EP-A2- 2 397 822
- DE-A1- 102014 116 100
- DE-U1- 202006 018 202

## Beschreibung

### Technisches Gebiet

Die Erfindung betrifft eine Vorrichtung zur Aufnahme einer Recheneinheit nach dem Oberbegriff des Anspruchs 1 und zwei Verwendungen nach den Ansprüchen 5 und 6.

### Stand der Technik

Derartige Vorrichtungen sind bereits in vielfältiger Form und Ausgestaltung bekannt und gebräuchlich.

In diesem Zusammenhang wird auf die EP 2 397 822 A2 verwiesen, welche ein mobiles Messgerät offenbart. Dieses Messgerät dient der temporären Verwendung in oder auf Fahrzeugen, wobei eine Umluftkühlung im Gehäuse des Messgerätes aufgezeigt wird.

Weiter wird auf die DE 20 2006 018 202 U1 verwiesen, welche eine Vorrichtung zur geschützten Aufnahme von Messgeräten dient und dabei eine Kühleinheit in Form eines Peltierelement aufweist.

Auch wird auf die DE 10 2014 116 100 A1 verwiesen, welche ein mobiles Messgerät offenbart, welche einen Anschluss an die Heizung eines Fahrzeugs aufweist.

So wird beispielsweise in der DE 10 2006 003 193 A1 ein Verfahren Zur Funktionsprüfung einer an einem Datenbus angeschlossenen Komponente im Innenraum eines Verkehrsmittels, wobei der Zustand der Komponente durch einen optischen bzw. elektromagnetischen Sensor erfasst wird, wobei ein Datenbus-Monitor die Datenbus-Signale erfasst und entsprechend deren zeitlichen Verlauf speichert, der Zustand der Komponente vom Sensor erfasst wird und bei Vorliegen ausgewählter Zustände Informationen in einem Gartenspeicher abgelegt werden. Dieses Verfahren wird dabei unter anderem auch bei Diagnosefahrten oder bei Dauerlauftestfahrten mit Fahrzeugen durchgeführt.

Weiter wird in der DE 10 2013 012 766 A1 ein mobiler Baugruppenträger offenbart. Der mobile Baugruppenträger umfasst dabei ein Gehäuse zum Aufnehmen einer elektronischen Baugruppe, wobei das Gehäuse einen Versorgungsanschluss zum versorgen der Baugruppe mit elektrischer Energie aufweist. In dem Gehäuse soll dabei genug Platz sein für unterschiedlichste Fahrzeug Meß- und Diagnosewerkzeuge, wie sie im Rahmen von Versuchsfahrten bei der Entwicklung und Erprobung neuer Fahrzeugbaureihen eingesetzt werden. Diese Messgeräte werden vom zuständigen Fachmann als sogenannter Datenlogger bezeichnet.

Auch wird auf die DE 10 2013 203 501 A1 hingewiesen. Hier wird ebenfalls der Einsatz eines Datenloggers in einem Fahrzeug beschrieben.

### Aufgabe der Erfindung

Die Aufgabe der vorliegenden Erfindung ist es, eine Vorrichtung bereitzustellen, die den Einsatz von Datenloggern In verschiedener Weise erleichtern soll. So soll durch die Vorrichtung Zeit beim Einsatz von Datenloggern eingespart werden. Unter Anderem soll der Datenlogger bzw. die Recheneinheit in einem bevorzugten Tempertaturberiech gehalten werden. Außerdem soll der Datenlogger schneller, besser wieder genutzt werden können, wenn er aus der Ruhelage in Arbeitslage versetzt wird. Zuletzt ist auch eine Aufgabe der erfindungsgemäßen Vorrichtung, dass der Datenlogger in Arbeitslage immer in einer optimalen Betriebstemperatur gehalten wird.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemäße Vorrichtung dient zur Aufnahme einer Recheneinheit. Dabei weist die Vorrichtung ein Gehäuse auf, wobei das Gehäuse umschließende Wandungen aufweist, wobei eine, keine oder mehrere der Wandungen öffenbar ist und in einem Fahrzeug transportierbar ist. Dabei kann die Wandung beispielsweise einen Zugang aufweisen oder komplett über ein Scharnier weggeklappt oder weggeschoben werden. Dies ist deswegen erforderlich, weil beispielsweise die Recheneinheit in das Gehäuse einbringbar und entnehmbar sein muss. Auch ist es manchmal bei Testfahrten notwendig, dass die Recheneinheit zugänglich ist.

Als Recheneinheit bzw Datenlogger kommen im Rahmen der Erfindung alle Rechner und Datenspeicher in Betracht, die die aufgezeichneten Fahrdaten auf einer lokalen Speichereinheit ablegen. Die Vorrichtung kann dabei die Recheneinheit optional mit Speichereinheit aufnehmen.

Ferner kann die Vorrichtung auch nur die Speicherheinheit aufnehmen. Ggfs. in einer weiteren baugleichen Vorrichtung - falls diese aus Belangen der Benutzbarkeit anders positioniert werden muss als der eigentliche Datenlogger.

Der Datenspeicher muss beispielsweise zum Austausch der Speichermedien gut zugänglich sein.

Datenlogger und Speichereinheit können dabei eine Einheit sein, müssen es jedoch nicht zwingend sein. Es gibt beispielsweise Lösungen, bei denen die externe Speichereinheit über eine Schnittstelle mit der Recheneinheit verbunden ist.

Die Wandungen sind gedämmt. Dabei können nur einzelne Wandungen gedämmt sein. Es können aber auch sämtliche Wandungen gedämmt sein. Eine Dämmung kommt in einer nicht beanspruchten Ausführungsform beispielsweise durch Polystyrol in Betracht.

Gemäß den Ansprüchen wird eine Dämmung erreicht, wenn die Wandlungen aus Polymethacrylimid bestehen. Polymethacrylimid weist dabei den besonderen Vorteil auf, dass die so ausgeführten Wanderungen sehr dünn sind und trotzdem einen hohen Dämmwert aufweisen.

In Arbeitslage bedeutet im Rahmen der Erfindung, dass der Datenlogger in Betrieb ist und bestimmungsgemäß eingesetzt wird. In Betrieb und bestimmungsgemäß kann beispielsweise bedeuten, dass der Datenlogger zur Aufzeichnung von Fahrzeugdaten eingeschalten ist und in dem Fahrzeug bewegt wird.

In Ruhelage bedeutet im Rahmen der Erfindung, dass der Datenlogger nicht mehr in Betrieb ist. Das kann beispielsweise dann der Fall sein, wenn eine Testfahrt abgeschlossen ist und der Datenlogger abgeschalten oder runtergefahren wird.

Das Gehäuse weist außerdem eine Kühlzuführöffnung auf, wobei die Kühlzuführöffnung mit einem Zuführverschluß wiederverschließbar ist. Die Kühlzuführöffnung ist mit einer Fahrzeugklimaanlage wirkverbindbar. Die Recheneinheit produziert in Arbeitslage hohe Temperaturen. Steigt die Temperatur in dem Gehäuse beispielsweise über 55°, so ist die Recheneinheit selbst und auch die in der Recheneinheit gespeicherten Daten gefährdet. Durch die Kühlzuführöffnung kann gekühlte Luft aus der Fahrzeugklimaanlage direkt in das Gehäuse mit der Recheneinheit geführt werden. Dies hat den Vorteil, dass eine im Fahrzeug sowieso im Betrieb befindliche Fahrzeugklimaanlage während einer Testfahrt, also in Arbeitslage, gezielt zur Kühlung des Gehäuses und der Recheneinheit genutzt werden kann. Auf diese Weise wird die Recheneinheit immer in der optimalen Betriebstemperatur gehalten, ohne dass es zu einer Überhitzung kommen kann.

In Ruhelage wird die Kühlzuführöffnung durch einen zugehörigen Verschluss geschlossen. Dies kann unter Abkoppelung der Fahrzeugklimaanlage oder auch schlicht durch Verschluss der Übertragungsleitung zwischen der Fahrzeugklimaanlage und dem Gehäuse geschehen. So kann beispielsweise bei sehr tiefen Außentemperaturen die Wärme der Recheneinheit im Gehäuse isoliert werden. Das wiederum hat den Vorteil, dass die Recheneinheit nach einer gewissen Dauer nicht völlig ausgekühlt ist und schneller wieder in Arbeitslage in Betrieb genommen werden kann.

Außerdem weist das Gehäuse eine Wärmeabführöffnung auf, wobei die Wärmeabführöffnung mit einem Abführverschluss wiederverschließbar ist. Die Wärmeabführöffnung dient dem Verhindern der Überhitzung der Recheneinheit und dem Inneren des Gehäuses während der Arbeitslage. Die zur Kühlung in das Gehäuse geleitete Luft der Klimaanlage wird durch die Recheneinheit erwärmt und durch die Wärmeabführöffnung aus dem Gehäuse herausgelassen bzw. geleitet. Die Wärmeabführöffnung kann zur Einleitung der Ruhelage durch den Abführverschluss geschlossen werden. Dies dient ebenfalls dem Halten der Wärme in dem Gehäuse während einer Ruhelage.

Außerdem ist ein Halterahmen vorsehbar. Ausserdem ist in dem Halterahmen ein Dämpfermittel vorsehbar. Vorsehbar bedeutet in diesem Zusammenhang, dass das Dämpfermittel optional vorsehbar ist. Ist aber ein Dämpfermittel vorhanden, ist der Halterahmen ist mit dem Dämpfermittel gegen das Gehäuse abgestützt. Das bedeutet, dass zwischen dem Gehäuse und dem Halterahmen ein Dämpfermittel angeordnet ist. Weiter kann das Gehäuse an dem Halterahmen mit einem Dämpfermittel gehaltert sein. Dazu ist das Gehäuse in dem Halterahmen oder an dem Halterahmen durch das Dämpfermittel derart gehalten, dass Vibrationen des Fahrzeugs auf die Recheneinheit möglichst gering oder zumindest abgefedert weitergegeben werden können. Neben dem Dämpfermittel sind auch weitere Möglichkeiten der Halterung des Gehäuses in dem entsprechenden Halterahmen möglich. Bei dem Dämpfermittel kann es sich um Springfedern, Gummiprofile oder speziell vorgesehene Vibrationsaufnehmer handeln.

Zusätzlich ist eine Energie- und/oder Datenzuführung für die Recheneinheit vorhanden. Die Energiezuführung dient dazu, dass die Recheneinheit immer über ausreichend Energie verfügt, um in Arbeitslage die notwendigen Erfassungs- und Rechenschritte durchführen zu können. Die Datenzuführung dient der Verbindung der Recheneinheit mit Sensoren und/oder Kameras und/oder anderen datenliefernden Systemen oder anderen Recheneinheiten des zu testenden Fahrzeugs. Auf diese Weise werden Daten und Informationen von den Sensoren und/oder Kameras und/oder anderen datenliefernden Systemen oder anderen Recheneinheiten des Fahrzeugs an die Recheneinheit geleitet.

Bei der Recheneinheit handelt es sich bevorzugt um einen sogenannten Datenlogger.

Weiter wird gesondert Schutz für die Verwendung der Vorrichtung in einem Kraftfahrzeug begehrt, wobei die Vorrichtung im Personensitzbereich und/oder in einem Kofferraum gelagert wird, wobei in Arbeitslage die Kühlzuführöffnung geöffnet wird und die Kühlzuführöffnung mit einer Fahrzeugklimaanlage verbunden wird und die Wärmeabführöffnung geöffnet wird.

Ebenso wird gesondert Schutz für die Verwendung der erfindungsgemäßen Vorrichtung in einem Kraftfahrzeug beansprucht, wobei die Vorrichtung im Personensitzbereich und/oder in einem Kofferraum gelagert wird, wobei in Ruhelage die Kühlzuführöffnung verschloßen wird und die Kühlzuführöffnung mit einer Fahrzeugklimaanlage entbunden wird und die Wärmeabführöffnung geschloßen wird.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine schematische Seitenansicht einer erfindungsgemäßen Vorrichtung (V);
- Figur 2: eine schematische Darstellung eines Teils des Aufbaus der erfindungsgemäßen Vorrichtung (V).

### Ausführungsbeispiel

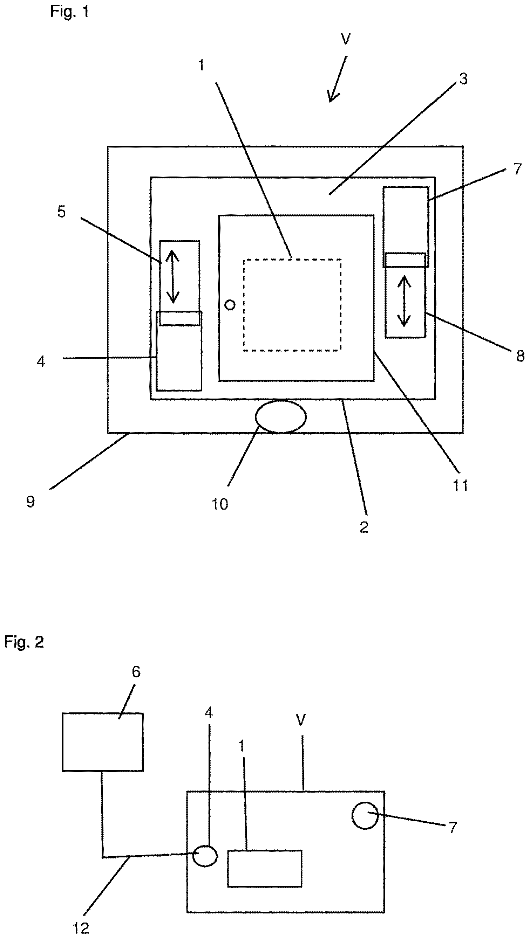

In der Figur 1 ist eine Vorrichtung V gezeigt. Die Vorrichtung V besteht in erster Linie aus einem Gehäuse 2. Das Gehäuse 2 weist umschließende Wandungen 3 auf. Die Wandung 3 in Figur 1 weist einen verschliessbaren Zugang 11 auf. Der Zugang 11 kann geöffnet werden, um die gestrichelt dargestellte Recheneinheit 1 aus dem Gehäuse 2 entnehmen zu können.

Die Wandungen bestehen aus Polymethacrylimid.

Weiter ist eine Kühlzuführöffnung 4 vorhanden. Die Kühlzuführöffnung 4 weist einen Zuführverschluss 5 auf. Der Zuführverschluss 5 ist hier als verschiebbare Klappe dargestellt. Die Ausführung als Klappe ist nicht zwingend. Es ist auch denkbar, dass hier ein Ventil oder ein Rückschlagventil zum Einsatz kommen kann. Wichtiger ist in diesem Zusammenhang, dass die Funktionalität des Zuführverschlusses gegeben ist. Als wichtige Funktionalität wird betrachtet, dass der Zuführverschluss auf Wunsch des Nutzers oder auch automatisch bei Eintreten definierter Definitionen die Kühlzuführöffnung derart abstellt, dass keine weitere Kühlluft in das Gehäuse mehr strömt. Dies wäre beispielsweise auch dann gegeben, wenn eine an das Gehäuse 2 angeschlossene Fahrzeugklimaanlage 6 des Fahrzeugs abgestellt wird und somit keine Kühlluft mehr in das Gehäuse 2 einströmt. Der in dem Zuführverschluss 5 gezeigte Doppelpfeil zeigt vereinfacht, dass der Zuführverschluss 5 verschließbar und öffnebar, also wieder verschließbar, ist.

Die Kühlzuführöffnung 4 mit einer Fahrzeugklimaanlage 6 wirkverbindbar. Die Fahrzeugklimaanlage 6 ist in Figur 2 gezeigt. Dort ist die Fahrzeugklimaanlage 6 über eine Übertragungsleitung 12 derart wirkverbunden, dass die kühle Luft der Fahrzeugklimaanlage 6 in das Innere des Gehäuses 2 der Vorrichtung V zu der Recheneinheit 1 über die Kühlzuführöffnung 4 verbringbar ist.

Auch ist in der Figur 1 eine Wärmeabführöffnung 7 vorhanden, wobei die Wärmeabführöffnung 7 mit einem Abführverschluß 8 wiederverschließbar ist. Der Abführverschluß 8 ist hier als verschiebbare Klappe dargestellt. Der in dem Abführverschluß 8 gezeigte Doppelpfeil zeigt vereinfacht, dass der Abführverschluß 8 verschließbar und öffnebar, also wiederverschließbar, ist.

Auch ist ein Halterahmen 9 vorhanden. Bei dem hier gezeigten Halterahmen 9 handelt es sich um eine Rahmenkonstruktion, welche um das Gehäuse 2 herum angeordnet ist. In einem anderen Ausführungsbeispiel kann der Halterahmen 9 auch lediglich einen Teil des Gehäuses 2 umfangen oder als Schalenkonstruktion ausgeführt sein, die zwischen dem Gehäuse 2 und dem Boden beispielsweise eines Fahrzeugkofferraums angeordnet wird.

Weiter ist ein Dämpfermittel 10 gezeigt, welches zumindest zwischen einem Teil des Gehäuses 2 und dem Halterahmen 9 halternd und dämpfungsabsorbierend und angeordnet ist.

Eine erfindungsgemäße Verwendung der Erfindung ist in Arbeitslage derart, dass die Vorrichtung V im Personensitzbereich und/oder in einem Kofferraum gelagert wird, wobei die Kühlzuführöffnung 4 geöffnet wird und die Kühlzuführöffnung 4 mit einer Fahrzeugklimaanlage 6 verbunden wird. Zusätzlich wird die Wärmeabführöffnung geöffnet. Auf diese Weise wird während des Einsatzes der Recheneinheit 1 im Gehäuse 2 eine optimale Temperatur für die Recheneinheit 1 gewährleistet, sodass die Recheneinheit 1 energiesparend und fehlerfrei betrieben werden kann.

In Ruhelage ist die Verwendung der Vorrichtung in einem Kraftfahrzeug derart, dass die Vorrichtung im Personensitzbereich und/oder in einem Kofferraum gelagert wird, wobei in Ruhelage die Kühlzuführöffnung 4 verschloßen wird und die Kühlzuführöffnung 4 von der Fahrzeugklimaanlage 6 entbunden wird und die Wärmeabführöffnung geschloßen wird. Auf diese Weise kann vorteilhaft die in dem Gehäuse 2 befindliche Wärme isoliert gehalten werden. Dies wird durch die Dämmung der Wandlungen 3 des Gehäuses 2 erreicht. Dies wiederum hat den Vorteil, dass beispielsweise nach einer langen kalten Nacht die Temperatur in dem Gehäuse 2 ausreichend warm ist, um die Recheneinheit 1 schnell wieder in Betrieb nehmen zu können.

### Bezugszeichenliste

| | |
|---|---|
| 1 | Recheneinheit |
| 2 | Gehäuse |
| 3 | Wandung |
| 4 | Kühlzuführöffnung |
| 5 | Zuführverschluß |
| 6 | Fahrzeugklimaanlage |
| 7 | Wärmeabführöffnung |
| 8 | Abführverschluß |
| 9 | Halterahmen |
| 10 | Dämpfermittel |
| 11 | Zugang |
| 12 | Übertragungsleitung |
| 13 | |
| V | Vorrichtung |

## Patentansprüche

1. Vorrichtung (V) zur Aufnahme einer Recheneinheit (1) mit einem Gehäuse (2), wobei das Gehäuse (2) umschließende Wandungen (3) aufweist und in einem Fahrzeug transportierbar ist, wobei die Wandungen (3) gedämmt sind, wobei eine Kühlzuführöffnung (4) des Gehäuses (2) vorhanden ist, die mit einer Fahrzeugklimaanlage (6) wirkverbindbar ist und wobei eine Wärmeabführöffnung (7) des Gehäuses (2) vorhanden ist,
**dadurch gekennzeichnet, dass**
die Wandungen (3) aus Polymethacrylimid bestehen, wobei die Kühlzuführöffnung (4) mit einem Zuführverschluß (5) wiederverschließbar ist, wobei die Wärmeabführöffnung (7) mit einem Abführverschluß (8) wiederverschließbar ist, wobei in Ruhelage der in das Gehäuse (2) aufgenommenen Recheneinheit (1) die Kühlzuführöffnung (4) durch den Zuführverschluß (5) auf Wunsch des Nutzers oder automatisch geschlossen ist und die Wärmeabführöffnung (7) in Ruhelage der in das Gehäuse (2) aufgenommenen Recheneinheit (1) durch den Abführverschluß (8) geschlossen ist.

2. Vorrichtung nach Anspruch 1, **gekennzeichnet durch** einen Halterahmen (9), wobei zwischen dem Gehäuse (2) und dem Halterahmen (9) ein Dämpfermittel (10) anordenbar ist.

3. Vorrichtung nach Anspruch 1 oder 2, **dadurch gekennzeichnet, dass** eine Energie-/Datenzuführung für die Recheneinheit (1) vorhanden ist.

4. Vorrichtung nach einem der vorigen Ansprüche, **dadurch gekennzeichnet, dass** ein Zugang (11) vorhanden ist.

5. Verwendung einer Vorrichtung nach den Ansprüchen 1 bis 4 in einem Kraftfahrzeug, **dadurch gekennzeichnet, dass** die Vorrichtung im Personensitzbereich und/oder in einem Kofferraum gelagert wird, wobei in Arbeitslage die Kühlzuführöffnung (4) geöffnet wird und die Kühlzuführöffnung (4) mit einer Fahrzeugklimaanlage (6) verbunden wird und die Wärmeabführöffnung (7) geöffnet wird.

6. Verwendung einer Vorrichtung nach den Ansprüchen 1 bis 4 in einem Kraftfahrzeug, **dadurch gekennzeichnet, dass** die Vorrichtung im Personensitzbereich und/oder in einem Kofferraum gelagert wird, wobei in Ruhelage die Kühlzuführöffnung (4) verschlossen wird und die Kühlzuführöffnung (4) mit einer Fahrzeugklimaanlage (6) entbunden wird und die Wärmeabführöffnung (7) geschlossen wird.

## Claims

1. Device (V) for accommodating a computer unit (1) with a housing (2), wherein the housing (2) has enclosing walls (3) and can be transported in a vehicle, wherein the walls (3) are insulated, wherein a cooling supply opening (4) of the housing (2) is present, which can be operatively connected to a vehicle air-conditioning system (6), and wherein a heat dissipation opening (7) of the housing (2) is present,
**characterised in that**
the walls (3) consist of polymethacrylimide, wherein the cooling supply opening (4) can be reclosed with a supply closure (5), wherein the heat dissipation opening (7) is reclosable with a dissipation closure (8), wherein, in the rest position of the computer unit (1) accommodated in the housing (2), the cooling supply opening (4) is closed by the supply closure (5) at the request of the user or automatically and the heat dissipation opening (7) is closed by the dissipation closure (8) in the rest position of the computer unit (1) accommodated in the housing (2).

2. Device according to claim 1, **characterised by** a holding frame (9), wherein a damping means (10) can be arranged between the housing (2) and the holding frame (9).

3. Device according to claim 1 or 2, **characterised in that** a power/data supply for the computer unit (1) is provided.

4. Device according to one of the preceding claims, **characterised in that** an access (11) is provided.

5. Use of a device according to claims 1 to 4 in a motor vehicle, **characterised in that** the device is stored in the passenger seating area and/or in a luggage compartment, the cooling supply opening (4) being opened in the working position and the cooling supply opening (4) being connected to a vehicle air-conditioning system (6) and the heat dissipation opening (7) being opened.

6. Use of a device according to claims 1 to 4 in a motor vehicle, **characterised in that** the device is stored in the passenger seat area and/or in a luggage compartment, the cooling supply opening (4) being closed in the rest position and the cooling supply opening (4) being disconnected from a vehicle air-conditioning system (6) and the heat dissipation opening (7) being closed.

## Revendications

1. Dispositif (V) pour la réception d'une unité de calcul (1) comportant un boîtier (2), dans lequel le boîtier (2) présente des parois (3) qui l'entourent et peut être transporté dans un véhicule, dans lequel les parois (3) sont isolées, dans lequel une ouverture d'alimentation de refroidissement (4) du boîtier (2) est présente, laquelle peut être reliée de manière fonctionnelle à une installation de climatisation de véhicule (6) et dans lequel une ouverture d'évacuation de chaleur (7) du boîtier (2) est présente,
**caractérisé en ce que**
les parois (3) sont composées de polyméthacrylimide, dans lequel l'ouverture d'alimentation de refroidissement (4) est refermable par une fermeture d'alimentation (5), dans lequel l'ouverture d'évacuation de chaleur (7) est refermable par une fermeture d'évacuation (8), dans lequel, en position de repos de l'unité de calcul (1) reçue dans le boîtier (2), l'ouverture d'alimentation de refroidissement (4) est fermée par la fermeture d'alimentation (5) à la demande de l'utilisateur ou automatiquement et, en position de repos de l'unité de calcul (1) reçue dans le boîtier (2), l'ouverture d'évacuation de chaleur (7) est fermée par la fermeture d'évacuation (8).

2. Dispositif selon la revendication 1, **caractérisé par** un cadre de maintien (9), dans lequel un moyen d'amortissement (10) peut être disposé entre le boîtier (2) et le cadre de maintien (9).

3. Dispositif selon la revendication 1 ou 2, **caractérisé en ce qu'**une alimentation en énergie/données est présente pour l'unité de calcul (1).

4. Dispositif selon l'une des revendications précédentes, **caractérisé en ce qu'**un accès (11) est présent.

5. Utilisation d'un dispositif selon les revendications 1 à 4 dans un véhicule automobile, **caractérisée en ce que** le dispositif est monté dans la zone de sièges pour personnes et/ou dans un coffre à bagages, dans lequel, en position de travail, l'ouverture d'alimentation de refroidissement (4) est ouverte et l'ouverture d'alimentation de refroidissement (4) est reliée à une installation de climatisation de véhicule (6) et l'ouverture d'évacuation de chaleur (7) est ouverte.

6. Utilisation d'un dispositif selon les revendications 1 à 4 dans un véhicule automobile, **caractérisée en ce que** le dispositif est monté dans la zone de sièges pour personnes et/ou dans un coffre à bagages, dans lequel, en position de repos, l'ouverture d'alimentation de refroidissement (4) est fermée et l'ouverture d'alimentation de refroidissement (4) est déliée d'une installation de climatisation de véhicule (6) et l'ouverture d'évacuation de chaleur (7) est fermée.
